# EUROPEAN PATENT SPECIFICATION

(11) **EP 4 047 215 B1**
(45) Date of publication and mention of the grant of the patent: **16.10.2024**
(21) Application number: 20879057.6
(22) Date of filing: 31.08.2020
(51) Int. Cl.: F04D 27/00, G05D 23/20, G06F 1/20, F04D 25/16

(54) **FAN SPEED REGULATION SYSTEM AND METHOD**
SYSTEM UND VERFAHREN ZUR REGELUNG DER DREHZAHL EINES LÜFTERS
SYSTÈME ET PROCÉDÉ DE RÉGULATION DE VITESSES DE VENTILATEURS

(30) Priority: 23.10.2019 CN 201911013555
(43) Date of publication of application: 24.08.2022
(73) Proprietor: ZTE Corporation, Shenzhen, Guangdong 518057 (CN)
(72) Inventor: ZHANG, Yuanjia, Shenzhen, Guangdong 518057 (CN)
(74) Representative: Canzler & Bergmeier Patentanwälte Partnerschaft mbB
(86) International application number: PCT/CN2020/112610
(87) International publication number: WO 2021/077902

(56) References cited:
- CN-A- 101 013 328
- CN-A- 101 871 465
- CN-A- 102 767 530
- CN-U- 202 711 093
- CN-U- 203 308 752
- CN-U- 208 607 606
- GB-A- 2 520 809
- US-A1- 2013 294 029
- US-A1- 2017 082 111
- US-B2- 9 732 759

## Description

### TECHNICAL FIELD

The present disclosure relates to the field of system heat dissipation technologies for network devices, and in particular to a fan speed regulation system and method.

### BACKGROUND

As network throughput keeps increasing, service cards of high-capacity network devices (such as switch devices) have increasingly high power consumption and also have an increasing demand for heat dissipation. At present, most network devices mainly adopt a fan cooling method, using a fan or a fan array to dissipate heat through a specific air outlet duct.

Currently, when a fan array is used for heat dissipation, a heat dissipation method with zonal speed regulation is mainly adopted. Specifically, a monitoring board acquires the environmental temperature and chip temperature of a line card inside a network device to perform overall speed regulation on fans in corresponding zones in combination with overall environmental temperature. An existing heat dissipation method with zonal speed regulation has the following drawbacks: Fans in different zones result in a great deal of control, and as a result, the rotational speed regulation of the fans is not smooth enough; the output power of most of the fans is useless, causing a waste of energy and generating loud noise; and since the monitoring board is required to perform overall control on the fans, if monitoring lines fail, the speed of the fans can no longer be regulated normally.

Patent literature (US 2013/0294029 A1) discloses a control method for a fan that includes the following steps: a temperature value for a heat element is detected by a heat detecting unit, and the temperature value is transmitted to a remote processor; a fan input controlling signal is calculated according to the temperature value; the fan input controlling signal is transmitted to a fan board directly from the remote processor; an input speed information is input to the fan for dissipating the heat element by the fan board according to the fan input controlling signal; an output speed information of the fan is received; and determining whether the fan works as predefined by the fan board according to the output speed information and the input speed information.

While the above publication may achieve its intended purpose, there is still a need for a new and improved fan speed regulation system and method.

### SUMMARY

The present disclosure provides a fan speed regulation system and method, so as to meet the requirements of network devices on heat dissipation, power consumption and noise.

According to a first aspect, an embodiment of the present disclosure provides a fan speed regulation system applied to a network device, including a monitoring board, a signal backplane, at least one temperature sensor array, at least one fan integration board, and at least one fan array. The monitoring board, the temperature sensor array, and the fan integration board are communicatively connected to the signal backplane, and the fan integration board is communicatively connected to the fan array. The monitoring board or the fan integration board is configured to calculate a rotational speed of the fan array according to temperature information and a preset speed regulation mode and generate corresponding rotational speed control information. The rotational speed control information includes a target rotational speed of each fan and a corresponding relationship between a fan and a temperature sensor subarray. The signal backplane is configured to transmit information. The temperature sensor array is configured to acquire temperature information of single boards in a network device. The fan integration board is further configured to regulate the rotational speed of each fan in the fan array according to the rotational speed control information. The fan array is configured to dissipate the heat of the network device. A separate control system is arranged on the fan integration board, the separate control system is able to independently obtain the temperature information acquired by the temperature sensor array, so as to generate corresponding rotational speed control information and control and drive a rotational speed of fans in the fan array, and thus the rotational speed of the fans is independently controlled and regulated by the fan integration board without the monitoring board.

According to a second aspect, an embodiment of the present disclosure provides a fan speed regulation method applied to a fan speed regulation system in a network device, including: acquiring, by a temperature sensor array, temperature information of single boards in a network device; obtaining, by a monitoring board or a fan integration board, the temperature information through a signal backplane; calculating, by the monitoring board or the fan integration board, a rotational speed of a fan array according to the temperature information and a preset speed regulation mode, and generating corresponding rotational speed control information, the rotational speed control information including a target rotational speed of each fan and a corresponding relationship between a fan and a temperature sensor subarray; and regulating, by the fan integration board, the rotational speed of each fan in the fan array according to the rotational speed control information; and the method further includes arranging a separate control system on the fan integration board, the separate control system is able to independently obtain the temperature information acquired by the temperature sensor array, so as to generate corresponding rotational speed control information and control and drive a rotational speed of fans in the fan array, and thus independently controlling and regulating the rotational speed of the fans by the fan integration board without the monitoring board.

According to a third aspect, an embodiment of the present disclosure provides a network device, including the fan speed regulation system according to the first aspect.

The above embodiments and other aspects of the present disclosure and the implementations thereof will be further described in brief description of drawings, detailed description and claims.

### BRIEF DESCRIPTION OF DRAWINGS

FIG. 1 is a schematic structural diagram of a fan speed regulation system according to the present disclosure;
FIG. 2 is a schematic diagram of a partial architecture of a network device according to the present disclosure;
FIG. 3 is a schematic effect diagram of a corresponding relationship of a fan according to the present disclosure;
FIG. 4 is a schematic diagram of a hardware topology of a fan speed regulation system according to the present disclosure;
FIG. 5 is a schematic diagram of a hardware topology of a fan speed regulation system according to the present disclosure;
FIG. 6 is a schematic flowchart of a fan speed regulation method according to the present disclosure;
FIG. 7 is a schematic flowchart of a fan speed regulation method according to the present disclosure;
FIG. 8 is a schematic flowchart of a fan speed regulation method according to the present disclosure; and
FIG. 9 is a schematic structural diagram of a network device according to the present disclosure.

### DETAILED DESCRIPTION

In order to make the objectives, technical solutions and advantages of the present disclosure clearer, the embodiments of the present disclosure will be described in detail hereinafter with reference to the accompanying drawings. It should be noted that the embodiments in the present disclosure and the features in the embodiments may be arbitrarily combined with one another without causing any conflict.

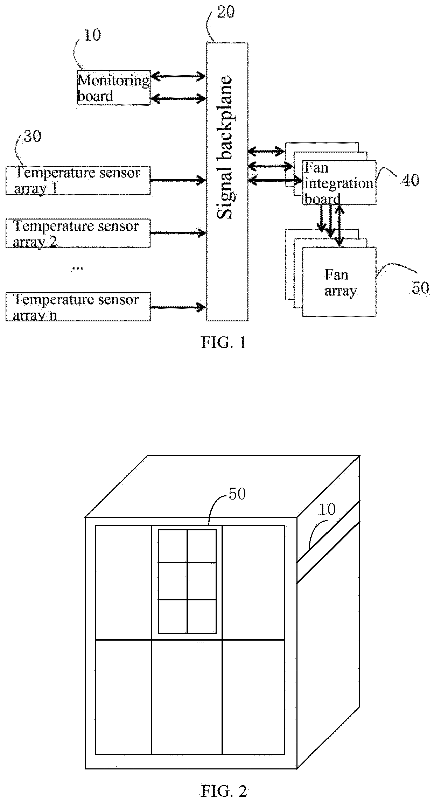

In an exemplary implementation, the present disclosure provides a fan speed regulation system. FIG. 1 is a schematic structural diagram of a fan speed regulation system according to the present disclosure. FIG. 2 is a schematic diagram of a partial architecture of a network device according to the present disclosure. As shown in FIG. 2, the fan speed regulation system may be integrated in any type of network device, such as a switch device.

Correspondingly, as shown in FIG. 1 and FIG. 2, the fan speed regulation system according to the present disclosure includes a monitoring board 10, a signal backplane 20, at least one temperature sensor array 30, at least one fan integration board 40, and at least one fan array 50. The monitoring board 10, the temperature sensor array 30, and the fan integration board 40 are communicatively connected to the signal backplane 20. The fan integration board 40 is communicatively connected to the fan array 50. The monitoring board 10 or the fan integration board 40 is configured to: calculate a rotational speed of the fan array 50 according to temperature information and a preset speed regulation mode, and generate corresponding rotational speed control information, the rotational speed control information including a target rotational speed of each fan and a corresponding relationship between a fan and a temperature sensor subarray. The signal backplane 20 is configured to transmit information. The temperature sensor array 30 is configured to acquire temperature information of single boards in a network device. The fan integration board 40 is further configured to regulate a rotational speed of each fan in the fan array 50 according to the rotational speed control information. The fan array 50 is configured to dissipate heat of the network device.

The monitoring board 10 is a fan control and management module in the network device, and is mainly configured to: calculate the rotational speed of the fan array 50 according to the temperature information acquired by the temperature sensor array 30 and the preset speed regulation mode, and generate corresponding rotational speed control information. Optionally, the preset speed regulation mode includes, but not limited to, an automatic independent speed regulation mode, an offline independent speed regulation mode, an automatic zonal speed regulation mode or a manual speed regulation mode. In the automatic independent speed regulation mode, the monitoring board 10 is required to sequentially obtain temperature information at positions on a single board from the temperature sensor array 30 and a corresponding relationship of specific positions of fans in the fan array 50, so as to dynamically regulate a rotational speed of a fan at a corresponding position, and fans at other unrelated positions are regulated down to an appropriate speed by a speed regulation policy. In the offline independent speed regulation mode, when the monitoring board 10 is not in place or after the monitoring board 10 is configured to the offline independent speed regulation mode, the fan integration board 40 automatically recognizes a corresponding relationship between a fan and the temperature sensor array 30 according to slot information, and directly obtains information about a corresponding temperature sensor to automatically regulate a rotational speed according to the corresponding relationship, regardless of information about other temperature sensors. In the automatic zonal speed regulation mode and the manual speed regulation mode as conventional control modes, only a maximum temperature and an environmental temperature need to be selected from the temperature information obtained by the temperature sensor array 30, and overall control is performed on the speed regulation of all fans in a zonal manner. In addition, the monitoring board 10 may further monitor electromechanical information (such as voltage or power consumption) of single boards in the network device, and may further carry out functions such as issuing fan control and power-on and -off control. The monitoring board 10 may communicate with a master control board in the network device to transmit the electromechanical information. The monitoring board 10 may be a dedicated single board or may be a small system possessing the same processing function or part of functional modules in the master control board, which is not limited by the embodiments of the present disclosure.

The signal backplane 20 is a transmission medium for communication signals, and may be configured to transmit information. The signal backplane 20 may be a circuit board, a connector, or a signal transmission medium such as an optical fiber or a network cable. The specific structure of the signal backplane is not limited by the embodiments of the present disclosure. Specifically, the signal backplane 20 may transmit electromechanical information between the monitoring board 10 and other single boards, and may further transmit control information between the monitoring board 10 and the fan integration board 40. In addition, the signal backplane 20 may also obtain a corresponding relationship between a fan and a single board, through different insertion positions on the signal backplane 20.

The temperature sensor array 30 is a temperature acquisition apparatus on a single board, and may utilize a plurality of temperature sensors to acquire temperature information of different positions and different chips of the single board. The temperature sensor array 30 may be a dedicated temperature sensor chip or may be a chip with a temperature measurement function, which is not limited by the embodiments of the present disclosure. Generally, in the network device, each single board is provided with a plurality of temperature sensors, forming a plurality of temperature sensor subarrays. The temperature sensor subarrays transmit data to the monitoring board 10 or the fan integration board 40 through a data bus.

The fan integration board 40 is a controller for a rotational speed of fans in the fan array 50, and may receive rotational speed control information transmitted by the monitoring board 10 to regulate the rotational speed of each fan in the fan array 50, or may independently monitor a temperature of a single board to generate rotational speed control information, so as to regulate the rotational speed of each fan in the fan array 50. The rotational speed control information may be instruction information for controlling the fan array 50 to regulate the rotational speed of each fan, and may specifically include, but not limited to, a target rotational speed of each fan and the corresponding relationship between a fan and a temperature sensor subarray. The fan integration board 40 may be a self-contained board or may be a part of a single board including a driver part, which is not limited by the embodiments of the present disclosure.

The fan array 50 may be a fan group composed of a plurality of fans, and is configured to dissipate the heat of the network device by air suction or air draft. The fan array 50 may be a multi-rotor fan formed by putting together a plurality of independent fans, and the number of the fans may be determined by the density of temperature sensors and the volume of each fan.

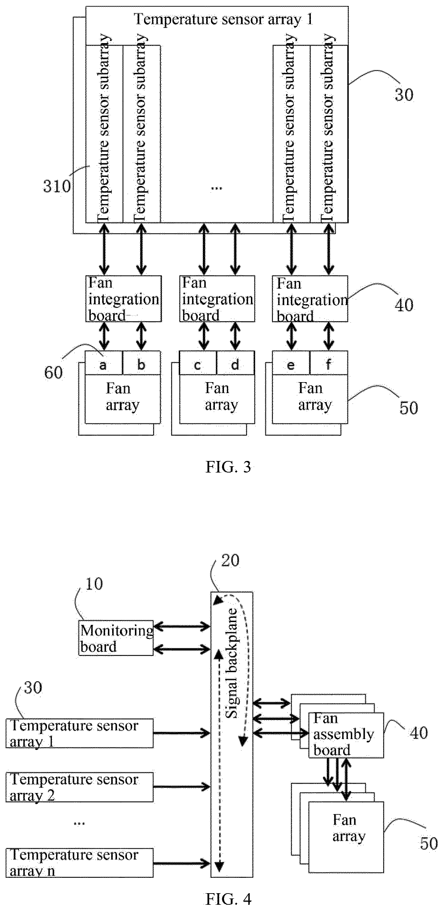

FIG. 3 is a schematic effect diagram of a corresponding relationship of a fan according to the present disclosure. As shown in FIG. 3, structurally, a single fan 60 may correspond to a temperature sensor subarray 310, or a plurality of single fans 60 correspond to a temperature sensor subarray 310. A fan integration board 40 may simultaneously control a plurality of fans. A fan integration board 40 may correspond to a plurality of temperature sensor subarrays 310.

In the present disclosure, as shown in FIG. 1, the monitoring board 10 may obtain temperature information acquired by all the temperature sensor arrays 30 through the signal backplane 20 and calculate, through the obtained temperature information, a rotational speed that is supposed to be configured for each fan, so as to generate corresponding rotational speed control information and issue the rotational speed control information to the fan integration board 40 through the signal backplane 20, so that the fan integration board 40 can control and drive a rotational speed of the fans according to the received rotational speed control information. A separate small control system arranged on the fan integration board 40 can independently obtain the temperature information acquired by the temperature sensor array 30, so as to generate corresponding rotational speed control information and control and drive a rotational speed of the fans, and thus the rotational speed of the fans can be independently controlled and regulated without the monitoring board 10.

To sum up, the fan speed regulation system in the present disclosure is configurable to allow the monitoring board, the fan integration board, and the temperature sensor array to cooperate with one another to implement automatic speed regulation on the fan array. Fine-grained monitoring is achieved by the high-density temperature sensor arrays and fan arrays, and the range of action of each fan is controlled at a low level, thereby increasing the efficiency of fan control and reducing the noise level of the fans. Because the number of the fans is large and the range of action of each fan is small, when a single fan fails, the influence on the fan speed regulation system is minimal, and the neighboring fans can also make up for the loss of air volume by the malfunctioning fan. In addition, when the network device is in an abnormal status, for example, when a temperature sensor or the monitoring board fails, the fan speed regulation system can also be automatically switched to the fan integration board to perform temperature detection and fan control, so that the influence caused the failure of part of the devices is minimized, improving the overall reliability.

In the embodiments of the present disclosure, the temperature sensor array in the fan speed regulation system acquires temperature information of single boards in the network device, the monitoring board or the fan integration board calculates the rotational speed of the fan array according to the acquired temperature information and the preset speed regulation mode and generates corresponding rotational speed control information, and the fan integration board regulates a rotational speed of each fan in the fan array according to the rotational speed control information. Thus, the problems such as low effectiveness and reliability, existing in conventional heat dissipation systems for network devices are resolved, fine fan speed control and redundant backup are achieved, the efficiency of fan control is improved, a noise level is reduced, and thus the higher requirements of network devices on heat dissipation, power consumption and noise are met.

Based on the above embodiment, a variant embodiment of the above embodiment is provided, and it should be noted that for brief description, only the differences from the above embodiment are described in the variant embodiment.

In an example, the preset speed regulation mode may adopt the automatic independent speed regulation mode. FIG. 4 is a schematic diagram of a hardware topology of a fan speed regulation system according to the present disclosure. As shown in FIG. 4, the monitoring board 10 may set a current speed regulation mode to the automatic independent speed regulation mode and send information about the current speed regulation mode to the fan integration board 40. The fan integration board 40 receives the information about the current speed regulation mode and then enters a slave mode. Then, the monitoring board 10 obtains the temperature information through a communication bus of the signal backplane 20, classifies the temperature information, and sets target temperature information of each fan in the fan array 50 according to a classification result. The temperature information may include a real-time temperature of a chip and an environmental temperature near the chip. The target temperature information of each fan in the fan array 50 may include the corresponding relationship between a fan and a temperature sensor subarray and a target temperature of each fan. The monitoring board 10 may calculate the target rotational speed of each fan according to the target temperature information and actual temperature information, then generate rotational speed control information according to the target rotational speed of each fan, and send the rotational speed control information to the fan integration board 40 through the signal backplane 20.

In an example, as shown in FIG. 4, when the preset speed regulation mode is the automatic independent speed regulation mode, the monitoring board 10 may determine the corresponding relationship between a fan and a temperature sensor subarray, select available temperatures from the temperature information, and calculate a reference temperature according to the available temperatures. The available temperatures include short-term environmental temperature and short-term incoming and outgoing air temperatures. The reference temperature is a standard difference between the short-term environmental temperature and the short-term incoming and outgoing air temperatures. Then, the monitoring board 10 sets the target temperature of each fan according to the reference temperature and target noise, and sets target temperature information of each fan in the fan array 50 according to the target temperature of each fan and the corresponding relationship.

In an example, as shown in FIG. 4, when the preset speed regulation mode is the automatic independent speed regulation mode, the monitoring board 10 may adopt the target temperature information as an input variable and the actual temperature information as an output variable to calculate a difference between the target temperature information and the actual temperature information as a deviation, and calculate the target rotational speed of each fan according to the preset speed regulation mode, the input variable, the output variable, and the deviation.

In an example, as shown in FIG. 4, when the preset speed regulation mode is the automatic independent speed regulation mode, after the rotational speed of each fan in the fan array 50 is regulated according to the rotational speed control information, the fan integration board 40 is further configured to: acquire a fedback rotational speed of each fan, and feed back the fedback rotational speed to the monitoring board 10. The monitoring board 10 is configured to: determine an operating status of the fan speed regulation system according to the fedback rotational speed of each fan, and give an alarm when determining that the operating status of the fan speed regulation system is an abnormal status.

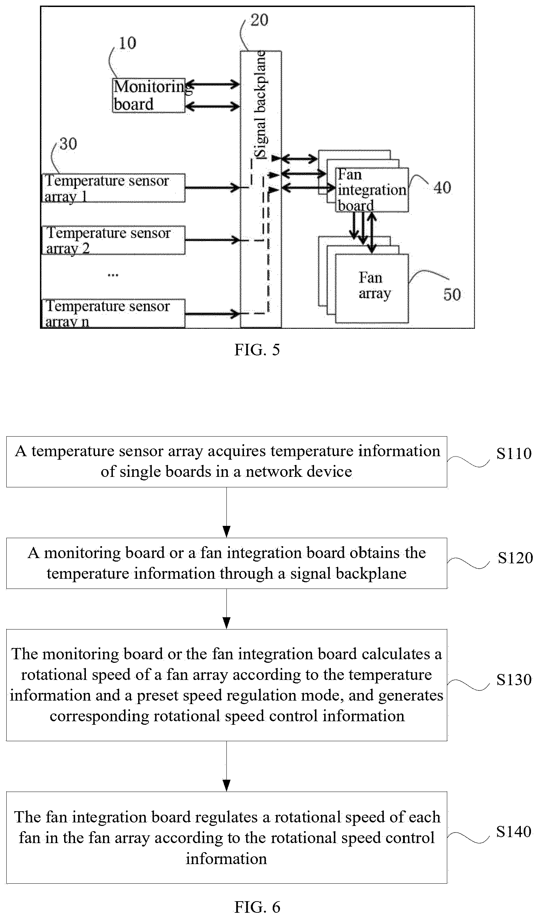

In an example, the preset speed regulation mode may be the automatic independent speed regulation mode. FIG. 5 is a schematic diagram of a hardware topology of a fan speed regulation system according to the present disclosure. As shown in FIG. 5, the monitoring board 10 may set a current speed regulation mode to the automatic independent speed regulation mode, and send information about the current speed regulation mode to the fan integration board 40. The fan integration board 40 receives the information about the current speed regulation mode and then enters a master mode, or the fan integration board 40 directly enters a master mode when determining that the number of times of failing to detect the monitoring board 10 exceeds a preset threshold. Then, the fan integration board 40 obtains the temperature information through an independent communication bus of the signal backplane 20, classifies the temperature information, and sets target temperature information of each fan in the fan array 50 according to a classification result. The temperature information includes a real-time temperature of a chip and an environmental temperature near the chip, and the target temperature information of each fan in the fan array 50 includes the corresponding relationship between a fan and a temperature sensor subarray and a target temperature of each fan. The fan integration board 40 may calculate the target rotational speed of each fan according to the target temperature information and actual temperature information, and then generate rotational speed control information according to the target rotational speed of each fan.

In an example, as shown in FIG. 5, when the preset speed regulation mode is the offline independent speed regulation mode, the fan integration board 40 may determine the corresponding relationship between a fan and a temperature sensor subarray, select available temperatures from the temperature information, and calculate a reference temperature according to the available temperatures. The available temperatures include short-term environmental temperature and short-term incoming and outgoing air temperatures. Then, the fan integration board 40 sets the target temperature of each fan according to the reference temperature and target noise, and sets target temperature information of each fan in the fan array 50 according to the target temperature of each fan and the corresponding relationship.

In an example, as shown in FIG. 5, when the preset speed regulation mode is the offline independent speed regulation mode, the fan integration board 40 may adopt the target temperature information as an input variable and the actual temperature information as an output variable to calculate a difference between the target temperature information and the actual temperature information as a deviation, and calculate the target rotational speed of each fan according to the preset speed regulation mode, the input variable, the output variable, and the deviation.

In an example, as shown in FIG. 5, when the preset speed regulation mode is the offline independent speed regulation mode, after the rotational speed of each fan in the fan array 50 is regulated according to the rotational speed control information, the fan integration board 40 is further configured to: acquire a fedback rotational speed of each fan to determine an operating status of the fan speed regulation system according to the fedback rotational speed of each fan, and give an alarm in a set alarm mode when determining that the operating status of the fan speed regulation system is an abnormal status.

In an exemplary implementation, FIG. 6 is a schematic flowchart of a fan speed regulation method according to the present disclosure. The method is applicable to a case in which speed regulation is performed on a fan for heat dissipation in a network device. Correspondingly, as shown in FIG. 6, the fan speed regulation method according to the present disclosure includes steps S 110 to S 140.

At S 110, a temperature sensor array acquires temperature information of single boards in a network device.

At S 120, a monitoring board or a fan integration board obtains the temperature information through a signal backplane.

At S 130, the monitoring board or the fan integration board calculates a rotational speed of a fan array according to the temperature information and a preset speed regulation mode and generates corresponding rotational speed control information.

The rotational speed control information may include a target rotational speed of each fan and a corresponding relationship between a fan and a temperature sensor subarray. The preset speed regulation mode may be a policy adopted to perform speed regulation on fans. Optionally, the preset speed regulation mode includes, but not limited to, an automatic independent speed regulation mode, an offline independent speed regulation mode, an automatic zonal speed regulation mode or a manual speed regulation mode.

At S 140, the fan integration board regulates a rotational speed of each fan in the fan array according to the rotational speed control information.

In the present disclosure, the monitoring board may obtain temperature information acquired by all temperature sensor arrays through the signal backplane and calculate, through the obtained temperature information, a rotational speed that is supposed to be configured for each fan, so as to generate corresponding rotational speed control information and issue the rotational speed control information to the fan integration board through the signal backplane, so that the fan integration board can control a rotational speed of a driving fan according to the received rotational speed control information. A separate small control system arranged on the fan integration board may independently obtain the temperature information acquired by the temperature sensor array, so as to generate corresponding rotational speed control information and control a rotational speed of a driving fan, and thus the rotational speed of the fan can be independently controlled and regulated without the monitoring board.

To sum up, the fan speed regulation system in the present disclosure is configurable to allow the monitoring board, the fan integration board, and the temperature sensor array to cooperate with one another to implement automatic speed regulation on the fan array. Fine-grained monitoring is achieved by the high-density temperature sensor arrays and fan arrays, and the range of action of each fan is controlled at a low level, thereby increasing the efficiency of fan control and reducing the noise level of the fans. Because the number of the fans is large and the range of action of each fan is small, when a single fan fails, the influence on the fan speed regulation system is minimal, and the neighboring fans can also make up for the loss of air volume by the malfunctioning fan. In addition, when the network device is in an abnormal status, for example, when a temperature sensor or the monitoring board fails, the fan speed regulation system can also be automatically switched to the fan integration board to perform temperature detection and fan control, so that the influence caused the failure of part of the devices is minimized, improving the overall reliability.

In the embodiments of the present disclosure, the temperature sensor array in the fan speed regulation system acquires temperature information of single boards in the network device, the monitoring board or the fan integration board calculates the rotational speed of the fan array according to the acquired temperature information and the preset speed regulation mode and generates corresponding rotational speed control information, and the fan integration board regulates a rotational speed of each fan in the fan array according to the rotational speed control information. Thus, the problems such as low effectiveness and reliability, existing in conventional heat dissipation systems for network devices are resolved, fine fan speed control and redundant backup are achieved, the efficiency of fan control is improved, a noise level is reduced, and thus the higher requirements of network devices on heat dissipation, power consumption and noise are met.

Based on the above embodiment, a variant embodiment of the above embodiment is provided, and it should be noted that for brief description, only the differences from the above embodiment are described in the variant embodiment.

In an example, the preset speed regulation mode may include the automatic independent speed regulation mode, and the temperature information includes a real-time temperature of a chip and an environmental temperature near the chip. The calculating, by the monitoring board or the fan integration board, a rotational speed of a fan array according to the temperature information and a preset speed regulation mode and generating corresponding rotational speed control information may include: obtaining, by the monitoring board, the temperature information through a communication bus of the signal backplane, classifying the temperature information, and setting target temperature information of each fan in the fan array according to a classification result; calculating, by the monitoring board, the rotational speed of each fan according to the target temperature information and actual temperature information; and generating, by the monitoring board, the rotational speed control information according to the target rotational speed of each fan, and sending the rotational speed control information to the fan integration board through the signal backplane.

The target temperature information of each fan in the fan array includes the corresponding relationship between a fan and a temperature sensor subarray and a target temperature of each fan. The target temperature may be a temperature to be reached after heat dissipation by a fan. The actual temperature information is a temperature acquired by the temperature sensor array. The target rotational speed is a rotational speed to which a fan needs to be regulated.

In an example, the classifying the temperature information and setting target temperature information of each fan in the fan array according to a classification result may include: determining, by the monitoring board, the corresponding relationship between a fan and a temperature sensor subarray; selecting, by the monitoring board, available temperatures from the temperature information, and calculating a reference temperature according to the available temperatures, the available temperatures including short-term environmental temperature and short-term incoming and outgoing air temperatures and the reference temperature being a standard difference between the short-term environmental temperature and the short-term incoming and outgoing air temperatures; and setting, by the monitoring board, the target temperature of each fan according to the reference temperature and target noise, and setting the target temperature information of each fan in the fan array according to the target temperature of each fan and the corresponding relationship.

The available temperatures may be some temperatures that are included in the temperature information and can be adopted to calculate the target temperature. In some examples, the available temperatures may include short-term environmental temperature and short-term incoming and outgoing air temperatures. The reference temperature may be temperature information adopted to calculate the target temperature. Specifically, a standard difference between the environmental temperature and the short-term incoming and outgoing air temperatures may be adopted as the reference temperature. The target noise may be noise to be generated by a fan after speed regulation is performed on the fan.

In an example, the calculating, by the monitoring board, the rotational speed of each fan according to the target temperature information and actual temperature information may include: adopting, by the monitoring board, the target temperature information as an input variable and the actual temperature information as an output variable to calculate a difference between the target temperature information and the actual temperature information as a deviation; and calculating, by the monitoring board, the target rotational speed of each fan according to the preset speed regulation mode, the input variable, the output variable, and the deviation.

The preset speed regulation mode may be a speed regulation mode set according to an actual requirement, such as a proportional-integral-derivative (PID) tuning mode. The specific content of the preset speed regulation mode is not limited by the present disclosure.

In an example, before the acquiring, by a temperature sensor array, temperature information of single boards in a network device, the method may include: setting, by the monitoring board, a current speed regulation mode to the automatic independent speed regulation mode, and sending information about the current speed regulation mode to the fan integration board; and receiving, by the fan integration board, the information about the current speed regulation mode and then entering a slave mode. After the regulating, by the fan integration board, a rotational speed of each fan in the fan array according to the rotational speed control information, the method may further include: acquiring, by the fan integration board, a fedback rotational speed of each fan, and feeding back the fedback rotational speed to the monitoring board; and determining, by the monitoring board, an operating status of the system according to the fedback rotational speed of each fan, and giving an alarm when determining that the operating status of the system is an abnormal status.

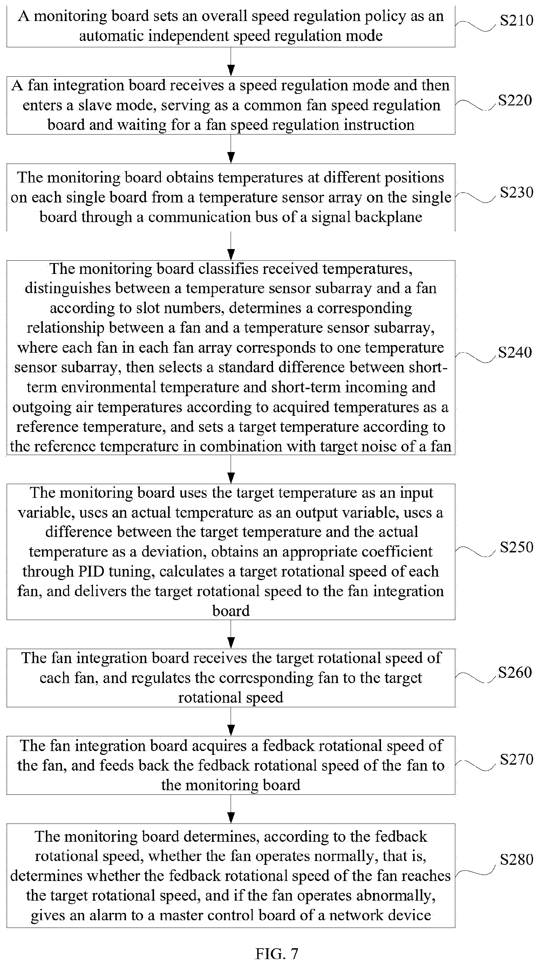

FIG. 7 is a schematic flowchart of a fan speed regulation method according to the present disclosure. In a specific example, as shown in FIG. 7, when a preset speed regulation mode is an automatic independent speed regulation mode, the fan speed regulation method may include steps S210 to S280.

At S210, a monitoring board sets an overall speed regulation policy as an automatic independent speed regulation mode.

When a fan speed regulation system adopts the automatic independent speed regulation mode, a temperature sensor array utilizes a bus of a signal backplane to report acquired temperature data to the monitoring board, and the monitoring board issues an instruction to a fan integration board through a bus.

At S220, a fan integration board receives a speed regulation mode and then enters a slave mode, serving as an ordinary fan speed regulation board and waiting for a fan speed regulation instruction.

At S230, the monitoring board obtains temperatures at different positions on each single board from a temperature sensor array on the single board through a communication bus of a signal backplane.

The temperatures at different positions on the single board may include a real-time temperature of each chip and an environmental temperature near the chip.

At S240, the monitoring board classifies the received temperatures, distinguishes between a temperature sensor subarray and a fan according to slot numbers, determines a corresponding relationship between a fan and a temperature sensor subarray, each fan in each fan array corresponding to a temperature sensor subarray, then selects a standard difference between short-term environmental temperature and short-term incoming and outgoing air temperatures according to acquired temperatures as a reference temperature, and sets a target temperature according to the reference temperature in combination with target noise of a fan.

At S250, the monitoring board adopts the target temperature as an input variable, an actual temperature as an output variable and a difference between the target temperature and the actual temperature as a deviation to obtain an appropriate coefficient through PID tuning, so as to calculate a target rotational speed of each fan, and sends the target rotational speed to the fan integration board.

At S260, the fan integration board receives the target rotational speed of each fan, and regulates the corresponding fan to the target rotational speed.

At S270, the fan integration board acquires a fedback rotational speed of the fan, and feeds back the fedback rotational speed of the fan to the monitoring board.

At S280, the monitoring board determines, according to the fedback rotational speed, whether the fan operates normally, i.e., determining whether the fedback rotational speed of the fan reaches the target rotational speed, and if the fan operates abnormally, the monitoring board gives an alarm to a master control board of a network device.

It should be noted that the aforementioned fan speed regulation method may be performed repeatedly. After a plurality of cycles, an approximating speed regulation result may be obtained for a rotational speed of a fan, and the overall fan speed regulation tends to become stable, reaching an optimal state of normal operation. Meanwhile, the monitoring board may be utilized to obtain all acquired information (such as a temperature and a rotational speed of a fan) at any time, facilitating monitoring. As can be seen, the monitoring board may obtain in real time a temperature acquired by the temperature sensor array and the fedback rotational speed of the fan fed back by the fan integration board to implement real-time closed-loop control and regulation of a rotational speed of a fan.

In an example, the preset speed regulation mode includes an offline independent speed regulation mode. Temperature information may include a real-time temperature of a chip and an environmental temperature near the chip. The calculating, by the monitoring board or the fan integration board, a rotational speed of a fan array according to the temperature information and a preset speed regulation mode and generating corresponding rotational speed control information may include: obtaining, by the fan integration board, the temperature information through an independent communication bus of the signal backplane, classifying the temperature information, and setting target temperature information of each fan in the fan array according to a classification result, the target temperature information of each fan in the fan array including the corresponding relationship between a fan and a temperature sensor subarray and a target temperature of each fan; calculating, by the fan integration board, the rotational speed of each fan according to the target temperature information and actual temperature information; and generating, by the fan integration board, the rotational speed control information according to the target rotational speed of each fan.

In an example, the classifying the temperature information and setting target temperature information of each fan in the fan array according to a classification result may include: determining, by the fan integration board, the corresponding relationship between a fan and a temperature sensor subarray; selecting, by the fan integration board, available temperatures from the temperature information, and calculating a reference temperature according to the available temperatures, the available temperatures including short-term environmental temperature and short-term incoming and outgoing air temperatures; and setting, by the fan integration board, the target temperature of each fan according to the reference temperature and target noise, and setting the target temperature information of each fan in the fan array according to the target temperature of each fan and the corresponding relationship.

In an example, the calculating, by the fan integration board, the rotational speed of each fan according to the target temperature information and actual temperature information may include: adopting, by the fan integration board, the target temperature information as an input variable and the actual temperature information as an output variable to calculate a difference between the target temperature information and the actual temperature information as a deviation; and calculating, by the fan integration board, the target rotational speed of each fan according to the preset speed regulation mode, the input variable, the output variable, and the deviation.

In an example, before the acquiring, by a temperature sensor array, temperature information of single boards in a network device, the method may include: setting, by the monitoring board, a current speed regulation mode to the offline independent speed regulation mode, and sending information about the current speed regulation mode to the fan integration board; and receiving, by the fan integration board, the information about the current speed regulation mode and then entering a master mode; or directly entering, by the fan integration board, a master mode when determining that the number of times of failing to detect the monitoring board exceeds a preset threshold. After the regulating, by the fan integration board, a rotational speed of each fan in the fan array according to the rotational speed control information, the method may include: acquiring, by the fan integration board, a fedback rotational speed of each fan; and determining, by the fan integration board, an operating status of the system according to the fedback rotational speed of each fan, and giving an alarm in a set alarm mode when determining that the operating status of the system is an abnormal status.

The preset threshold may be a value set according to an actual requirement, such as 3, 5 or 10. The specific value of the preset threshold is not limited by the present disclosure. The set alarm mode may be an alarm mode adopted according to an actual requirement, such as giving an alarm through an indicator light or an alarm. The specific type of the set alarm mode is also not limited by the present disclosure.

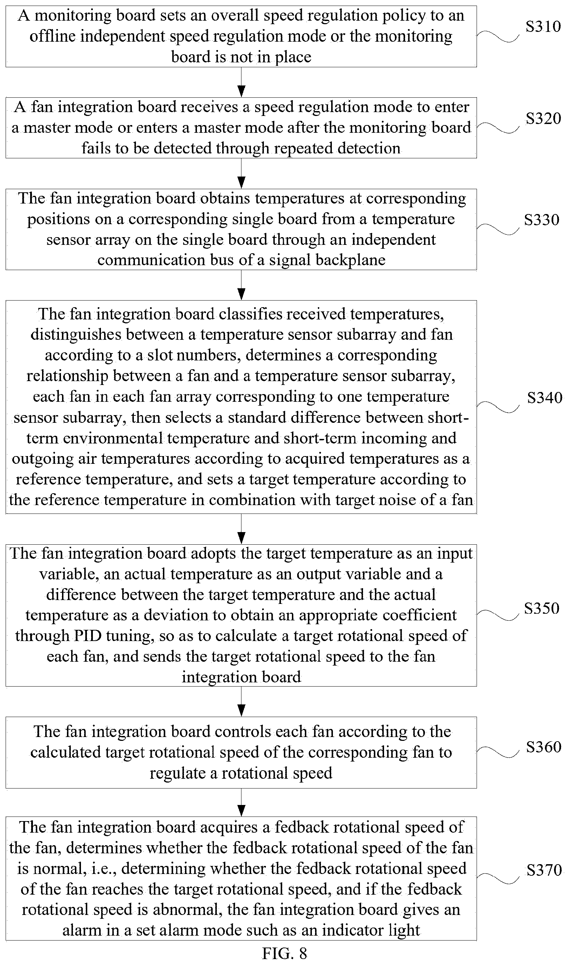

FIG. 8 is a schematic flowchart of a fan speed regulation method according to the present disclosure. In a specific example, as shown in FIG. 8, when a preset speed regulation mode is an offline independent speed regulation mode, the fan speed regulation method may include steps S310 to S370.

At S310, a monitoring board sets an overall speed regulation policy as an offline independent speed regulation mode or the monitoring board is not in place.

When the fan speed regulation system adopts the offline independent speed regulation mode, a subarray of a temperature sensor array is connected to a fan integration board through a bus of a signal backplane. The fan integration board may obtain temperature information through the bus.

At S320, a fan integration board receives a speed regulation mode and then enters a master mode, or a fan integration board enters a master mode after the monitoring board fails to be detected for multiple times.

When the fan integration board is in the master mode, a monitoring function module of the fan integration board may be activated, starting to independently perform speed regulation on a fan.

At S330, the fan integration board obtains temperatures at corresponding positions on a corresponding single board from a temperature sensor array on the single board through an independent communication bus of a signal backplane.

The temperatures at different positions on the single board may include a real-time temperature of each chip and an environmental temperature near the chip.

At S340, the fan integration board classifies the received temperatures, distinguishes between a temperature sensor subarray and a fan according to slot numbers, determines a corresponding relationship between a fan and a temperature sensor subarray, each fan in each fan array corresponding to a temperature sensor subarray, then selects a standard difference between short-term environmental temperature and short-term incoming and outgoing air temperatures according to acquired temperatures as a reference temperature, and sets a target temperature according to the reference temperature in combination with target noise of a fan.

At S350, the fan integration board adopts the target temperature as an input variable, an actual temperature as an output variable and a difference between the target temperature and the actual temperature as a deviation to obtain an appropriate coefficient through PID tuning, so as to calculate a target rotational speed of each fan, and sends the target rotational speed to the fan integration board.

At S360, the fan integration board controls each fan according to the calculated target rotational speed of the corresponding fan to regulate a rotational speed.

At S370, the fan integration board acquires a fedback rotational speed of the fan to determine whether the fedback rotational speed of the fan is normal, i.e., determining whether the fedback rotational speed of the fan reaches the target rotational speed, and if the fedback rotational speed is abnormal, the fan integration board gives an alarm in a set alarm mode such as an indicator light.

It should be noted that the aforementioned fan speed regulation method may be performed repeatedly. After a plurality of cycles, an approximating speed regulation result may be obtained for a rotational speed of a fan, and the overall fan speed regulation tends to become stable, reaching an optimal state of normal operation. If the monitoring board is online, the monitoring board may be utilized to access every fan integration board to obtain status information about temperature, fans, alarm, etc.

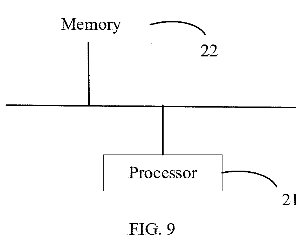

FIG. 9 is a schematic structural diagram of a network device according to the present disclosure. As shown in FIG. 9, the network device in the present disclosure may further include:
one or more processors 21 and a storage apparatus 22. While one or more processors 21 may be provided in the network device, a processor 21 is taken as an example in FIG. 9. The storage apparatus 22 is configured to store one or more programs. The one or more programs are executed by the one or more processors 21.

The processor 21 and the storage apparatus 22 in the network device may be connected through a bus or in manners. Bus connection is taken as an example in FIG. 9.

The storage apparatus 22 serves as a computer-readable storage medium, and may be configured to store software programs, computer-executable programs, and modules. The storage apparatus 22 may include a program storage area and a data storage area. The program storage area may store an operating system and an application required by at least one function. The data storage area may store data created according to the use of a device and the like. Moreover, the storage apparatus 22 may include a high-speed random access memory (RAM), and may further include a non-volatile storage, such as at least one magnetic disk storage device or flash storage device or other non-volatile solid state storage devices. In some examples, the storage apparatus 22 may further include memories disposed remotely relative to the processor 21. These remote memories may be connected to the network device through a network. An example of the aforementioned network includes, but not limited to, the Internet, an intranet, a local area network, a mobile communication network, and a combination thereof.

In addition to the aforementioned components, the network device in the present disclosure may further include a fan speed regulation system. The fan speed regulation system includes a monitoring board, a signal backplane, at least one temperature sensor array, at least one fan integration board, and at least one fan array. The monitoring board, the temperature sensor array, and the fan integration board are communicatively connected to the signal backplane. The fan integration board is communicatively connected to the fan array. The monitoring board or the fan integration board is configured to: calculate a rotational speed of the fan array according to temperature information and a preset speed regulation mode, and generate corresponding rotational speed control information, the rotational speed control information including a target rotational speed of each fan and a corresponding relationship between a fan and a temperature sensor subarray. The signal backplane is configured to transmit information. The temperature sensor array is configured to acquire temperature information of single boards in a network device. The fan integration board is further configured to regulate a rotational speed of each fan in the fan array according to the rotational speed control information. The fan array is configured to dissipate the heat of the network device.

In the embodiments of the present disclosure, the temperature sensor array in the fan speed regulation system is utilized to acquire temperature information of single boards in the network device, the monitoring board or the fan integration board calculates the rotational speed of the fan array according to the acquired temperature information and the preset speed regulation mode and generates corresponding rotational speed control information, and the fan integration board regulates a rotational speed of each fan in the fan array according to the rotational speed control information. Thus, the problems such as low effectiveness and reliability, existing in conventional heat dissipation systems for network devices are resolved, fine fan speed control and redundant backup are achieved, the efficiency of fan control is improved, a noise level is reduced, and thus the higher requirements of network devices on heat dissipation, power consumption and noise are met.

The above is merely exemplary embodiments of the present disclosure rather than is intended to limit the scope of protection of the present disclosure.

Those skilled in the art should understand that the term "user terminal" covers any appropriate type of wireless user device such as a mobile phone, a portable data processing apparatus, a portable web browser or an on-board mobile station.

Generally, the various embodiments in the present disclosure may be implemented in hardware or a dedicated circuit, software, logic or any combination thereof. For example, some aspects may be implemented in hardware, while other aspects may be implemented in firmware or software executed by a controller, a microprocessor or other processing apparatuses, although the present disclosure is not limited thereto.

The embodiments of the present disclosure may be implemented by a data processor of a mobile device executing computer program instructions, e.g., in a processor entity, or by hardware or a combination of software and hardware. The computer program instructions may be assembly instructions, instruction set architecture (ISA) instructions, machine instructions, machine-related instructions, microcode, firmware instructions, state setting data, or source or object code written by any combination of one or more programming languages.

The block diagram of any logic flow in the accompanying drawings of the present disclosure may represent program steps, interconnected logic circuits, modules and functions, or a combination of program steps and logic circuits, modules, and functions. The computer program may be stored in a memory. The memory may be of any type suitable for the local technical environment and may be implemented using any appropriate data storage technology, for example, but not limited to, a read-only memory (ROM), a RAM, an optical memory device and system (a digital versatile disc (DVD) or a compact disc read-only memory (CD-ROM)), or the like. The computer-readable medium may include a non-transitory storage medium. The data processor may be of any type suitable for a local technology environment, for example, but not limited to, a general-purpose computer, a special-purpose computer, a microprocessor, a digital signal processor (DSP), an application-specific integrated circuit (ASIC), a programmable logic device (field programmable gate array, FGPA), and a processor based on a multi-core processor architecture.

By way of exemplary and non-limitative examples, a detailed description of exemplary embodiments of the present disclosure has been provided above. However, when considered in conjunction with the accompanying drawings and claims, a variety of modifications and adaptations to the above embodiments will be apparent to those skilled in the art without departing from the scope of the present invention. Accordingly, the appropriate scope of the present invention will be determined in accordance with the claims.

## Claims

1. A fan speed regulation system, configured in a network device, and comprising a monitoring board (10), a signal backplane (20), at least one temperature sensor array (30), at least one fan integration board (40), and at least one fan array (50), the monitoring board (10), the temperature sensor array (30) and the fan integration board (40) being communicatively connected to the signal backplane (20), and the fan integration board (40) being communicatively connected to the fan array (50); wherein:
the monitoring board (10) or the fan integration board (40) is configured to calculate a rotational speed of the fan array according to temperature information and a preset speed regulation mode, and generate corresponding rotational speed control information, wherein the rotational speed control information comprises a target rotational speed of each fan and a corresponding relationship between a fan and a temperature sensor subarray (310);
the signal backplane (20) is configured to transmit information;
the temperature sensor array (30) is configured to acquire temperature information of single boards in a network device;
the fan integration board (40) is further configured to regulate a rotational speed of each fan in the fan array (50) according to the rotational speed control information; and
the fan array (50) is configured to dissipate heat of the network device;
**characterized in that**,
a separate control system is arranged on the fan integration board (40), the separate control system is able to independently obtain the temperature information acquired by the temperature sensor array (30), so as to generate corresponding rotational speed control information and control and drive a rotational speed of fans in the fan array (50), and thus the rotational speed of the fans is independently controlled and regulated by the fan integration board (40) without the monitoring board (10).

2. The system of claim 1, wherein the preset speed regulation mode comprises the automatic independent speed regulation mode, and the temperature information comprises a real-time temperature of a chip and an environmental temperature near the chip;
the monitoring board (10) is configured to set a current speed regulation mode as the automatic independent speed regulation mode, and send information about the current speed regulation mode to the fan integration board;
the fan integration board (140) is configured to receive the information about the current speed regulation mode to enter a slave mode; and
the monitoring board (10) is configured to: obtain the temperature information through a communication bus of the signal backplane (20), classify the temperature information, and set target temperature information of each fan in the fan array according to a classification result, wherein the target temperature information of each fan in the fan array comprises the corresponding relationship between a fan and a temperature sensor subarray (310) and a target temperature of each fan; calculate the rotational speed of each fan according to the target temperature information and actual temperature information; and generate the rotational speed control information according to the target rotational speed of each fan, and send the rotational speed control information to the fan integration board (40) through the signal backplane (20).

3. The system of claim 2, wherein the monitoring board (10) is configured to: determine the corresponding relationship between a fan and a temperature sensor subarray (310), select available temperatures from the temperature information, and calculate a reference temperature according to the available temperatures, wherein the available temperatures comprise short-term environmental temperature and short-term incoming and outgoing air temperatures, and the reference temperature is a standard difference between the short-term environmental temperature and the short-term incoming and outgoing air temperatures; and set the target temperature of each fan according to the reference temperature and target noise, and set the target temperature information of each fan in the fan array according to the target temperature of each fan and the corresponding relationship.

4. The system of claim 2, wherein the monitoring board (10) is configured to: adopt the target temperature information as an input variable and the actual temperature information as an output variable to calculate a difference between the target temperature information and the actual temperature information as a deviation; and calculate the target rotational speed of each fan according to the preset speed regulation mode, the input variable, the output variable, and the deviation.

5. The system of claim 1, wherein after the rotational speed of each fan in the fan array (50) is regulated according to the rotational speed control information, the fan integration board (40) is further configured to: acquire a fedback rotational speed of each fan, and feed back the fedback rotational speed to the monitoring board (10); and
the monitoring board (10) is configured to: determine an operating status of the system according to the fedback rotational speed of each fan, and give an alarm in response to determining that the operating status of the system is an abnormal status.

6. The system of claim 1, wherein the preset speed regulation mode comprises the offline independent speed regulation mode, and the temperature information comprises a real-time temperature of a chip and an environmental temperature near the chip;
the monitoring board (10) is configured to: set a current speed regulation mode as the offline independent speed regulation mode, and send information about the current speed regulation mode to the fan integration board;
the fan integration board (40) is configured to receive the information about the current speed regulation mode and then enter a master mode; or
the fan integration board (40) is configured to directly enter a master mode in response to determining that the number of times of failing to detect the monitoring board exceeds a preset threshold; and
the fan integration board (40) is configured to: obtain the temperature information through an independent communication bus of the signal backplane, classify the temperature information, and set target temperature information of each fan in the fan array (50) according to a classification result, wherein the target temperature information of each fan in the fan array (50) comprises the corresponding relationship between a fan and a temperature sensor subarray (310) and a target temperature of each fan; calculate the rotational speed of each fan according to the target temperature information and actual temperature information; and generate the rotational speed control information according to the target rotational speed of each fan.

7. The system of claim 6, wherein the fan integration board (40) is configured to: determine the corresponding relationship between a fan and a temperature sensor subarray (310), select available temperatures from the temperature information, and calculate a reference temperature according to the available temperatures, wherein the available temperatures comprise short-term environmental temperature and short-term incoming and outgoing air temperatures; and set the target temperature of each fan according to the reference temperature and target noise, and set the target temperature information of each fan in the fan array (50) according to the target temperature of each fan and the corresponding relationship.

8. The system of claim 6, wherein the fan integration board (40) is configured to adopt the target temperature information as an input variable and the actual temperature information as an output variable to calculate a difference between the target temperature information and the actual temperature information as a deviation; and calculate the target rotational speed of each fan according to the preset speed regulation mode, the input variable, the output variable, and the deviation.

9. The system of claim 1, wherein after the rotational speed of each fan in the fan array (50) is regulated according to the rotational speed control information, the fan integration board (40) is further configured to: acquire a fedback rotational speed of each fan; and determine an operating status of the fan speed regulation system according to the fedback rotational speed of each fan, and give an alarm in a set alarm mode in response to determining that the operating status of the system is an abnormal status.

10. A fan speed regulation method, applied to a fan speed regulation system in a network device, and comprising:
acquiring, by a temperature sensor array, temperature information of single boards in a network device (5110);
obtaining, by a monitoring board or a fan integration board, the temperature information through a signal backplane (S120);
calculating, by the monitoring board or the fan integration board, a rotational speed of a fan array according to the temperature information and a preset speed regulation mode, and generating corresponding rotational speed control information (S130), wherein the rotational speed control information comprises a target rotational speed of each fan and a corresponding relationship between a fan and a temperature sensor subarray; and
regulating, by the fan integration board, a rotational speed of each fan in the fan array according to the rotational speed control information (S140);
**characterized in that**, the method further comprises,
arranging a separate control system on the fan integration board (40), the separate control system is able to independently obtain the temperature information acquired by the temperature sensor array (30), so as to generate corresponding rotational speed control information and control and drive a rotational speed of fans in the fan array (50), and thus independently controlling and regulating the rotational speed of the fans by the fan integration board (40) without the monitoring board (10).

11. The method of claim 10, wherein the preset speed regulation mode comprises an automatic independent speed regulation mode, an offline independent speed regulation mode, an automatic zonal speed regulation mode or a manual speed regulation mode.

12. The method of claim 11, wherein the preset speed regulation mode comprises the automatic independent speed regulation mode, and the temperature information comprises a real-time temperature of a chip and an environmental temperature near the chip;
the calculating, by the monitoring board or the fan integration board, a rotational speed of a fan array according to the temperature information and a preset speed regulation mode and generating corresponding rotational speed control information comprises:
obtaining, by the monitoring board, the temperature information through a communication bus of the signal backplane, classifying the temperature information, and setting target temperature information of each fan in the fan array according to a classification result, wherein the target temperature information of each fan in the fan array comprises the corresponding relationship between a fan and a temperature sensor subarray and a target temperature of each fan;
calculating, by the monitoring board, the rotational speed of each fan according to the target temperature information and actual temperature information; and
generating, by the monitoring board, the rotational speed control information according to the target rotational speed of each fan, and sending the rotational speed control information to the fan integration board through the signal backplane.

13. The method of claim 12, wherein the classifying the temperature information, and setting target temperature information of each fan in the fan array according to a classification result comprises:
determining, by the monitoring board, the corresponding relationship between a fan and a temperature sensor subarray;
selecting, by the monitoring board, available temperatures from the temperature information, and calculating a reference temperature according to the available temperatures, wherein the available temperatures comprise short-term environmental temperature and short-term incoming and outgoing air temperatures, and the reference temperature is a standard difference between the short-term environmental temperature and the short-term incoming and outgoing air temperatures; and
setting, by the monitoring board, the target temperature of each fan according to the reference temperature and target noise, and setting the target temperature information of each fan in the fan array according to the target temperature of each fan and the corresponding relationship.

14. A network device, comprising the fan speed regulation system of any one of claims 1 to 9.

## Patentansprüche

1. Lüfterdrehzahlregelungssystem, das in einer Netzwerkvorrichtung konfiguriert ist und eine Überwachungsplatine (10), eine Signalrückwandplatine (20), mindestens eine Temperatursensormatrix (30), mindestens eine Lüfterintegrationsplatine (40) und mindestens eine Lüftermatrix (50) umfasst, wobei die Überwachungsplatine (10), die Temperatursensormatrix (30) und die Lüfterintegrationsplatine (40) kommunikativ mit der Signalrückwandplatine (20) verbunden sind und die Lüfterintegrationsplatine (40) kommunikativ mit der Lüftermatrix (50) verbunden ist; wobei:
die Überwachungsplatine (10) oder die Lüfterintegrationsplatine (40) konfiguriert ist, um eine Drehzahl der Lüftermatrix gemäß Temperaturinformationen und einem voreingestellten Drehzahlregelungsmodus zu berechnen und entsprechende Drehzahlsteuerinformationen zu erzeugen, wobei die Drehzahlsteuerinformationen eine Solldrehzahl jedes Lüfters und eine entsprechende Beziehung zwischen einem Lüfter und einer Temperatursensoruntermatrix (310) umfassen;
die Signalrückwandplatine (20) konfiguriert ist, um Informationen zu übertragen;
die Temperatursensormatrix (30) konfiguriert ist, um Temperaturinformationen einzelner Platinen in einer Netzwerkvorrichtung zu erfassen;
die Lüfterintegrationsplatine (40) ferner konfiguriert ist, um eine Drehzahl jedes Lüfters in der Lüftermatrix (50) gemäß den Drehzahlsteuerinformationen zu regeln; und
die Lüftermatrix (50) konfiguriert ist, um Wärme der Netzwerkvorrichtung abzuleiten;
**dadurch gekennzeichnet, dass**
ein separates Steuerungssystem auf der Lüfterintegrationsplatine (40) angeordnet ist, wobei das separate Steuerungssystem in der Lage ist, die durch die Temperatursensormatrix (30) erfassten Temperaturinformationen unabhängig zu erhalten, um entsprechende Drehzahlsteuerinformationen zu erzeugen und eine Drehzahl von Lüftern in der Lüftermatrix (50) zu steuern und anzutreiben, und somit die Drehzahl der Lüfter durch die Lüfterintegrationsplatine (40) ohne die Überwachungsplatine (10) unabhängig gesteuert und geregelt wird.

2. System nach Anspruch 1, wobei der voreingestellte Drehzahlregelungsmodus den automatischen unabhängigen Drehzahlregelungsmodus umfasst und die Temperaturinformationen eine Echtzeittemperatur eines Chips und eine Umgebungstemperatur in der Nähe des Chips umfassen;
die Überwachungsplatine (10) konfiguriert ist, um einen aktuellen Drehzahlregelungsmodus als den automatischen unabhängigen Drehzahlregelungsmodus einzustellen und Informationen über den aktuellen Drehzahlregelungsmodus an die Lüfterintegrationsplatine zu senden;
die Lüfterintegrationsplatine (140) konfiguriert ist, um die Informationen über den aktuellen Drehzahlregelungsmodus zu empfangen, um in einen Slave-Modus einzutreten; und
die Überwachungsplatine (10) konfiguriert ist, um: die Temperaturinformationen durch einen Kommunikationsbus der Signalrückwandplatine (20) zu erhalten, die Temperaturinformationen zu klassifizieren und Solltemperaturinformationen jedes Lüfters in der Lüftermatrix gemäß einem Klassifizierungsergebnis einzustellen, wobei die Solltemperaturinformationen jedes Lüfters in der Lüftermatrix die entsprechende Beziehung zwischen einem Lüfter und einer Temperatursensoruntermatrix (310) und eine Solltemperatur jedes Lüfters umfassen; die Drehzahl jedes Lüfters gemäß den Solltemperaturinformationen und Ist-Temperaturinformationen zu berechnen; und die Drehzahlsteuerinformationen gemäß der Solldrehzahl jedes Lüfters zu erzeugen und die Drehzahlsteuerinformationen durch die Signalrückwandplatine (20) an die Lüfterintegrationsplatine (40) zu senden.

3. System nach Anspruch 2, wobei die Überwachungsplatine (10) konfiguriert ist, um: die entsprechende Beziehung zwischen einem Lüfter und einer Temperatursensoruntermatrix (310) zu bestimmen, verfügbare Temperaturen aus den Temperaturinformationen auszuwählen und eine Referenztemperatur gemäß den verfügbaren Temperaturen zu berechnen, wobei die verfügbaren Temperaturen eine kurzfristige Umgebungstemperatur und kurzfristige eingehende und ausgehende Lufttemperaturen umfassen und die Referenztemperatur eine Standardabweichung zwischen der kurzfristigen Umgebungstemperatur und den kurzfristigen eingehenden und ausgehenden Lufttemperaturen ist; und die Solltemperatur jedes Lüfters gemäß der Referenztemperatur und dem Sollrauschen einzustellen und die Solltemperaturinformationen jedes Lüfters in der Lüftermatrix gemäß der Solltemperatur jedes Lüfters und der entsprechenden Beziehung einzustellen.

4. System nach Anspruch 2, wobei die Überwachungsplatine (10) konfiguriert ist, um: die Solltemperaturinformationen als eine Eingabevariable und die Ist-Temperaturinformationen als eine Ausgabevariable anzunehmen, um eine Abweichung zwischen den Solltemperaturinformationen und den Ist-Temperaturinformationen zu berechnen; und die Solldrehzahl jedes Lüfters gemäß dem voreingestellten Drehzahlregelungsmodus, der Eingabevariable, der Ausgabevariable und der Abweichung zu berechnen.

5. System nach Anspruch 1, wobei, nachdem die Drehzahl jedes Lüfters in der Lüftermatrix (50) gemäß den Drehzahlsteuerinformationen geregelt wurde, die Lüfterintegrationsplatine (40) ferner konfiguriert ist, um: eine rückgekoppelte Drehzahl jedes Lüfters zu erfassen und die rückgekoppelte Drehzahl an die Überwachungsplatine (10) zurückzumelden; und
die Überwachungsplatine (10) konfiguriert ist, um: einen Betriebsstatus des Systems gemäß der rückgekoppelten Drehzahl jedes Lüfters zu bestimmen und als Reaktion auf das Bestimmen, dass der Betriebsstatus des Systems ein anormaler Status ist, einen Alarm auszugeben.

6. System nach Anspruch 1, wobei der voreingestellte Drehzahlregelungsmodus den offline unabhängigen Drehzahlregelungsmodus umfasst und die Temperaturinformationen eine Echtzeittemperatur eines Chips und eine Umgebungstemperatur in der Nähe des Chips umfassen;
die Überwachungsplatine (10) konfiguriert ist, um: einen aktuellen Drehzahlregelungsmodus als den offline unabhängigen Drehzahlregelungsmodus einzustellen und Informationen über den aktuellen Drehzahlregelungsmodus an die Lüfterintegrationsplatine zu senden;
die Lüfterintegrationsplatine (40) konfiguriert ist, um die Informationen über den aktuellen Drehzahlregelungsmodus zu empfangen und dann in einen Master-Modus einzutreten; oder
die Lüfterintegrationsplatine (40) konfiguriert ist, um als Reaktion auf das Bestimmen, dass die Anzahl von Malen, in denen die Überwachungsplatine nicht detektiert wird, einen voreingestellten Schwellenwert überschreitet, direkt in einen Master-Modus einzutreten; und
die Lüfterintegrationsplatine (40) konfiguriert ist, um: die Temperaturinformationen durch einen unabhängigen Kommunikationsbus der Signalrückwandplatine zu erhalten, die Temperaturinformationen zu klassifizieren und Solltemperaturinformationen jedes Lüfters in der Lüftermatrix (50) gemäß einem Klassifizierungsergebnis einzustellen, wobei die Solltemperaturinformationen jedes Lüfters in der Lüftermatrix (50) die entsprechende Beziehung zwischen einem Lüfter und einer Temperatursensoruntermatrix (310) und eine Solltemperatur jedes Lüfters umfassen; die Drehzahl jedes Lüfters gemäß den Solltemperaturinformationen und Ist-Temperaturinformationen zu berechnen; und die Drehzahlsteuerinformationen gemäß der Solldrehzahl jedes Lüfters zu erzeugen.

7. System nach Anspruch 6, wobei die Lüfterintegrationsplatine (40) konfiguriert ist, um: die entsprechende Beziehung zwischen einem Lüfter und einer Temperatursensoruntermatrix (310) zu bestimmen, verfügbare Temperaturen aus den Temperaturinformationen auszuwählen und eine Referenztemperatur gemäß den verfügbaren Temperaturen zu berechnen, wobei die verfügbaren Temperaturen eine kurzfristige Umgebungstemperatur und kurzfristige eingehende und ausgehende Lufttemperaturen umfassen; und die Solltemperatur jedes Lüfters gemäß der Referenztemperatur und dem Sollrauschen einzustellen und die Solltemperaturinformationen jedes Lüfters in der Lüftermatrix (50) gemäß der Solltemperatur jedes Lüfters und der entsprechenden Beziehung einzustellen.

8. System nach Anspruch 6, wobei die Lüfterintegrationsplatine (40) konfiguriert ist, um die Solltemperaturinformationen als eine Eingabevariable und die Ist-Temperaturinformationen als eine Ausgabevariable anzunehmen, um eine Abweichung zwischen den Solltemperaturinformationen und den Ist-Temperaturinformationen zu berechnen; und die Solldrehzahl jedes Lüfters gemäß dem voreingestellten Drehzahlregelungsmodus, der Eingabevariable, der Ausgabevariable und der Abweichung zu berechnen.

9. System nach Anspruch 1, wobei, nachdem die Drehzahl jedes Lüfters in der Lüftermatrix (50) gemäß den Drehzahlsteuerinformationen geregelt wurde, die Lüfterintegrationsplatine (40) ferner konfiguriert ist, um: eine rückgekoppelte Drehzahl jedes Lüfters zu erfassen; und einen Betriebsstatus des Lüfterdrehzahlregelungssystems gemäß der rückgekoppelten Drehzahl jedes Lüfters zu bestimmen und als Reaktion auf das Bestimmen, dass der Betriebsstatus des Systems ein anormaler Status ist, einen Alarm in einem eingestellten Alarmmodus auszugeben.

10. Lüfterdrehzahlregelungsverfahren, das auf ein Lüfterdrehzahlregelungssystem in einer Netzwerkvorrichtung angewendet wird und Folgendes umfasst:
Erfassen von Temperaturinformationen einzelner Platinen in einer Netzwerkvorrichtung durch eine Temperatursensormatrix (S110);
Erhalten der Temperaturinformationen durch eine Signalrückwandplatine durch eine Überwachungsplatine oder eine Lüfterintegrationsplatine (S120);
Berechnen einer Drehzahl einer Lüftermatrix durch die Überwachungsplatine oder die Lüfterintegrationsplatine gemäß den Temperaturinformationen und einem voreingestellten Drehzahlregelungsmodus und Erzeugen entsprechender Drehzahlsteuerinformationen (S130), wobei die Drehzahlsteuerinformationen eine Solldrehzahl jedes Lüfters und eine entsprechende Beziehung zwischen einem Lüfter und einer Temperatursensoruntermatrix umfassen; und
Regeln einer Drehzahl jedes Lüfters in der Lüftermatrix durch die Lüfterintegrationsplatine gemäß den Drehzahlsteuerinformationen (S140);
**dadurch gekennzeichnet, dass** das Verfahren ferner Folgendes umfasst:
Anordnen eines separaten Steuersystems auf der Lüfterintegrationsplatine (40), wobei das separate Steuersystem in der Lage ist, die durch die Temperatursensormatrix (30) erfassten Temperaturinformationen unabhängig zu erhalten, um entsprechende Drehzahlsteuerinformationen zu erzeugen und eine Drehzahl von Lüftern in der Lüftermatrix (50) zu steuern und anzutreiben, und somit unabhängiges Steuern und Regeln der Drehzahl der Lüfter durch die Lüfterintegrationsplatine (40) ohne die Überwachungsplatine (10).

11. Verfahren nach Anspruch 10, wobei der voreingestellte Drehzahlregelungsmodus einen automatischen unabhängigen Drehzahlregelungsmodus, einen offline unabhängigen Drehzahlregelungsmodus, einen automatischen zonalen Drehzahlregelungsmodus oder einen manuellen Drehzahlregelungsmodus umfasst.

12. Verfahren nach Anspruch 11, wobei der voreingestellte Drehzahlregelungsmodus den automatischen unabhängigen Drehzahlregelungsmodus umfasst und die Temperaturinformationen eine Echtzeittemperatur eines Chips und eine Umgebungstemperatur in der Nähe des Chips umfassen;
das Berechnen einer Drehzahl einer Lüftermatrix durch die Überwachungsplatine oder die Lüfterintegrationsplatine gemäß den Temperaturinformationen und einem voreingestellten Drehzahlregelungsmodus und Erzeugen entsprechender Drehzahlsteuerinformationen Folgendes umfasst:
Erhalten der Temperaturinformationen durch die Überwachungsplatine durch einen Kommunikationsbus der Signalrückwandplatine, Klassifizieren der Temperaturinformationen und Einstellen von Solltemperaturinformationen jedes Lüfters in der Lüftermatrix gemäß einem Klassifizierungsergebnis, wobei die Solltemperaturinformationen jedes Lüfters in der Lüftermatrix die entsprechende Beziehung zwischen einem Lüfter und einer Temperatursensoruntermatrix und eine Solltemperatur jedes Lüfters umfassen;
Berechnen der Drehzahl jedes Lüfters durch die Überwachungsplatine gemäß den Solltemperaturinformationen und Ist-Temperaturinformationen; und
Erzeugen der Drehzahlsteuerinformationen durch die Überwachungsplatine gemäß der Solldrehzahl jedes Lüfters und Senden der Drehzahlsteuerinformationen durch die Signalrückwandplatine an die Lüfterintegrationsplatine.

13. Verfahren nach Anspruch 12, wobei das Klassifizieren der Temperaturinformationen und Einstellen von Solltemperaturinformationen jedes Lüfters in der Lüftermatrix gemäß einem Klassifizierungsergebnis Folgendes umfasst:
Bestimmen der entsprechenden Beziehung zwischen einem Lüfter und einer Temperatursensoruntermatrix durch die Überwachungsplatine;
Auswählen von verfügbaren Temperaturen aus den Temperaturinformationen durch die Überwachungsplatine und Berechnen einer Referenztemperatur gemäß den verfügbaren Temperaturen, wobei die verfügbaren Temperaturen eine kurzfristige Umgebungstemperatur und kurzfristige eingehende und ausgehende Lufttemperaturen umfassen und die Referenztemperatur eine Standardabweichung zwischen der kurzfristigen Umgebungstemperatur und den kurzfristigen eingehenden und ausgehenden Lufttemperaturen ist; und
Einstellen der Solltemperatur jedes Lüfters durch die Überwachungsplatine gemäß der Referenztemperatur und dem Sollrauschen und Einstellen der Solltemperaturinformationen jedes Lüfters in der Lüftermatrix gemäß der Solltemperatur jedes Lüfters und der entsprechenden Beziehung.

14. Netzwerkvorrichtung, die das Lüfterdrehzahlregelungssystem nach einem der Ansprüche 1 bis 9 umfasst.

## Revendications

1. Système de régulation de la vitesse d'un ventilateur, configuré dans un dispositif de réseau, et comprenant un tableau de surveillance (10), un fond de panier de signal (20), au moins un réseau de capteurs de température (30), au moins un tableau d'intégration de ventilateur (40), et au moins un réseau de ventilateurs (50), le tableau de surveillance (10), le réseau de capteurs de température (30) et le tableau d'intégration de ventilateur (40) étant connectés en communication au fond de panier de signal (20), et le tableau d'intégration de ventilateur (40) étant connecté en communication au réseau de ventilateurs (50) ; dans lequel :
le tableau de surveillance (10) ou le tableau d'intégration de ventilateur (40) est configuré pour calculer une vitesse de rotation du réseau de ventilateurs en fonction d'informations de température et d'un mode de régulation de vitesse prédéfini, et générer des informations de contrôle de vitesse de rotation correspondantes, dans lequel les informations de contrôle de vitesse de rotation comprennent une vitesse de rotation cible de chaque ventilateur et une relation correspondante entre un ventilateur et un sous-réseau de capteurs de température (310) ;
le fond de panier de signal (20) est configuré pour transmettre des informations ;
le réseau de capteurs de température (30) est configuré pour acquérir des informations de température de tableaux individuels dans un dispositif de réseau ;
le tableau d'intégration de ventilateur (40) est en outre configuré pour réguler une vitesse de rotation de chaque ventilateur dans le réseau de ventilateurs (50) en fonction des informations de contrôle de vitesse de rotation ; et
le réseau de ventilateurs (50) est configuré pour dissiper la chaleur du dispositif de réseau ;
**caractérisé en ce que**,
un système de contrôle séparé est agencé sur le tableau d'intégration de ventilateur (40), le système de contrôle séparé est capable d'obtenir indépendamment les informations de température acquises par le réseau de capteurs de température (30), de manière à générer des informations de contrôle de vitesse de rotation correspondantes et contrôler et entraîner une vitesse de rotation des ventilateurs dans le réseau de ventilateurs (50), et ainsi la vitesse de rotation des ventilateurs est contrôlée et régulée indépendamment par le tableau d'intégration de ventilateur (40) sans le tableau de surveillance (10).

2. Système selon la revendication 1, dans lequel le mode de régulation de vitesse prédéfini comprend le mode de régulation de vitesse indépendant automatique, et les informations de température comprennent une température en temps réel d'une puce et une température environnementale à proximité de la puce ;
le tableau de surveillance (10) est configuré pour définir un mode de régulation de vitesse actuel en tant que mode de régulation de vitesse indépendant automatique, et envoyer des informations concernant le mode de régulation de vitesse actuel au tableau d'intégration de ventilateur ;
le tableau d'intégration de ventilateur (140) est configuré pour recevoir les informations concernant le mode de régulation de vitesse actuel pour entrer dans un mode esclave ; et
le tableau de surveillance (10) est configuré pour : obtenir les informations de température par l'intermédiaire d'un bus de communication du fond de panier de signal (20), classer les informations de température, et définir des informations de température cible de chaque ventilateur dans le réseau de ventilateurs en fonction d'un résultat de classification, dans lequel les informations de température cible de chaque ventilateur dans le réseau de ventilateurs comprennent la relation correspondante entre un ventilateur et un sous-réseau de capteurs de température (310) et une température cible de chaque ventilateur ; calculer la vitesse de rotation de chaque ventilateur en fonction des informations de température cible et des informations de température réelle ; et générer les informations de contrôle de vitesse de rotation en fonction de la vitesse de rotation cible de chaque ventilateur, et envoyer les informations de contrôle de vitesse de rotation au tableau d'intégration de ventilateur (40) par l'intermédiaire du fond de panier de signal (20).

3. Système selon la revendication 2, dans lequel le tableau de surveillance (10) est configuré pour : déterminer la relation correspondante entre un ventilateur et un sous-réseau de capteurs de température (310), sélectionner des températures disponibles à partir des informations de température, et calculer une température de référence en fonction des températures disponibles, dans lequel les températures disponibles comprennent une température environnementale à court terme et des températures d'air entrant et sortant à court terme, et la température de référence est une différence standard entre la température environnementale à court terme et les températures d'air entrant et sortant à court terme ; et définir la température cible de chaque ventilateur en fonction de la température de référence et du bruit cible, et définir les informations de température cible de chaque ventilateur dans le réseau de ventilateurs en fonction de la température cible de chaque ventilateur et de la relation correspondante.

4. Système selon la revendication 2, dans lequel le tableau de surveillance (10) est configuré pour : adopter les informations de température cible en tant que variable d'entrée et les informations de température réelle en tant que variable de sortie pour calculer une différence entre les informations de température cible et les informations de température réelle en tant qu'écart ; et calculer la vitesse de rotation cible de chaque ventilateur en fonction du mode de régulation de vitesse prédéfini, de la variable d'entrée, de la variable de sortie, et de l'écart.

5. Système selon la revendication 1, dans lequel après que la vitesse de rotation de chaque ventilateur dans le réseau de ventilateurs (50) est régulée en fonction des informations de contrôle de vitesse de rotation, le tableau d'intégration de ventilateur (40) est en outre configuré pour : acquérir une vitesse de rotation de retour de chaque ventilateur, et renvoyer la vitesse de rotation de retour au tableau de surveillance (10) ; et
le tableau de surveillance (10) est configuré pour : déterminer un état de fonctionnement du système en fonction de la vitesse de rotation de retour de chaque ventilateur, et donner une alarme en réponse à la détermination que l'état de fonctionnement du système est un état anormal.

6. Système selon la revendication 1, dans lequel le mode de régulation de vitesse prédéfini comprend le mode de régulation de vitesse indépendant hors ligne, et les informations de température comprennent une température en temps réel d'une puce et une température environnementale à proximité de la puce ;
le tableau de surveillance (10) est configuré pour : définir un mode de régulation de vitesse actuel en tant que mode de régulation de vitesse indépendant hors ligne, et envoyer des informations concernant le mode de régulation de vitesse actuel au tableau d'intégration de ventilateur ;
le tableau d'intégration de ventilateur (40) est configuré pour recevoir les informations concernant le mode de régulation de vitesse actuel et ensuite entrer dans un mode maître ; ou
le tableau d'intégration de ventilateur (40) est configuré pour entrer directement dans un mode maître en réponse à la détermination que le nombre d'échecs de détection du tableau de surveillance dépasse un seuil prédéfini ; et
le tableau d'intégration de ventilateur (40) est configuré pour : obtenir les informations de température par l'intermédiaire d'un bus de communication indépendant du fond de panier de signal, classer les informations de température, et définir des informations de température cible de chaque ventilateur dans le réseau de ventilateurs (50) en fonction d'un résultat de classification, dans lequel les informations de température cible de chaque ventilateur dans le réseau de ventilateurs (50) comprennent la relation correspondante entre un ventilateur et un sous-réseau de capteurs de température (310) et une température cible de chaque ventilateur ; calculer la vitesse de rotation de chaque ventilateur en fonction des informations de température cible et des informations de température réelle ; et générer les informations de contrôle de vitesse de rotation en fonction de la vitesse de rotation cible de chaque ventilateur.

7. Système selon la revendication 6, dans lequel le tableau d'intégration de ventilateur (40) est configuré pour : déterminer la relation correspondante entre un ventilateur et un sous-réseau de capteurs de température (310), sélectionner des températures disponibles à partir des informations de température, et calculer une température de référence en fonction des températures disponibles, dans lequel les températures disponibles comprennent une température environnementale à court terme et des températures d'air entrant et sortant à court terme ; et définir la température cible de chaque ventilateur en fonction de la température de référence et du bruit cible, et définir les informations de température cible de chaque ventilateur dans le réseau de ventilateurs (50) en fonction de la température cible de chaque ventilateur et de la relation correspondante.

8. Système selon la revendication 6, dans lequel le tableau d'intégration de ventilateur (40) est configuré pour adopter les informations de température cible en tant que variable d'entrée et les informations de température réelle en tant que variable de sortie pour calculer une différence entre les informations de température cible et les informations de température réelle en tant qu'écart ; et calculer la vitesse de rotation cible de chaque ventilateur en fonction du mode de régulation de vitesse prédéfini, de la variable d'entrée, de la variable de sortie, et de l'écart.

9. Système selon la revendication 1, dans lequel après que la vitesse de rotation de chaque ventilateur dans le réseau de ventilateurs (50) est régulée en fonction des informations de contrôle de vitesse de rotation, le tableau d'intégration de ventilateur (40) est en outre configuré pour : acquérir une vitesse de rotation de retour de chaque ventilateur ; et déterminer un état de fonctionnement du système de régulation de vitesse de ventilateur en fonction de la vitesse de rotation de retour de chaque ventilateur, et donner une alarme dans un mode d'alarme défini en réponse à la détermination que l'état de fonctionnement du système est un état anormal.

10. Procédé de régulation de la vitesse d'un ventilateur, appliqué à un système de régulation de la vitesse d'un ventilateur dans un dispositif de réseau, et comprenant :
acquérir, par un réseau de capteurs de température, des informations de température de tableaux individuels dans un dispositif de réseau (S110) ;
obtenir, par un tableau de surveillance ou un tableau d'intégration de ventilateur, les informations de température par l'intermédiaire d'un fond de panier de signal (S120) ;
calculer, par le tableau de surveillance ou le tableau d'intégration de ventilateur, une vitesse de rotation d'un réseau de ventilateurs en fonction des informations de température et d'un mode de régulation de vitesse prédéfini, et générer des informations de contrôle de vitesse de rotation correspondantes (S130), dans lequel les informations de contrôle de vitesse de rotation comprennent une vitesse de rotation cible de chaque ventilateur et une relation correspondante entre un ventilateur et un sous-réseau de capteurs de température ; et
réguler, par le tableau d'intégration de ventilateur, une vitesse de rotation de chaque ventilateur dans le réseau de ventilateurs en fonction des informations de contrôle de vitesse de rotation (S140) ;
**caractérisé en ce que**, le procédé comprend en outre,
agencer un système de contrôle séparé sur le tableau d'intégration de ventilateur (40), le système de contrôle séparé est capable d'obtenir indépendamment les informations de température acquises par le réseau de capteurs de température (30), de manière à générer des informations de contrôle de vitesse de rotation correspondantes et contrôler et entraîner une vitesse de rotation des ventilateurs dans le réseau de ventilateurs (50), et ainsi contrôler et réguler indépendamment la vitesse de rotation des ventilateurs par le tableau d'intégration de ventilateur (40) sans le tableau de surveillance (10).

11. Procédé selon la revendication 10, dans lequel le mode de régulation de vitesse prédéfini comprend un mode de régulation de vitesse indépendant automatique, un mode de régulation de vitesse indépendant hors ligne, un mode de régulation de vitesse zonal automatique ou un mode de régulation de vitesse manuel.

12. Procédé selon la revendication 11, dans lequel le mode de régulation de vitesse prédéfini comprend le mode de régulation de vitesse indépendant automatique, et les informations de température comprennent une température en temps réel d'une puce et une température environnementale à proximité de la puce ;
le calcul, par le tableau de surveillance ou le tableau d'intégration de ventilateur, d'une vitesse de rotation d'un réseau de ventilateurs en fonction des informations de température et d'un mode de régulation de vitesse prédéfini et la génération d'informations de contrôle de vitesse de rotation correspondantes comprennent :
obtenir, par le tableau de surveillance, les informations de température par l'intermédiaire d'un bus de communication du fond de panier de signal, classer les informations de température, et définir des informations de température cible de chaque ventilateur dans le réseau de ventilateurs en fonction d'un résultat de classification, dans lequel les informations de température cible de chaque ventilateur dans le réseau de ventilateurs comprennent la relation correspondante entre un ventilateur et un sous-réseau de capteurs de température et une température cible de chaque ventilateur ;
calculer, par le tableau de surveillance, la vitesse de rotation de chaque ventilateur en fonction des informations de température cible et des informations de température réelle ; et
générer, par le tableau de surveillance, les informations de contrôle de vitesse de rotation en fonction de la vitesse de rotation cible de chaque ventilateur, et transmettre les informations de contrôle de vitesse de rotation au tableau d'intégration de ventilateur par l'intermédiaire du fond de panier de signal.

13. Procédé selon la revendication 12, dans lequel la classification des informations de température, et la définition d'informations de température cible de chaque ventilateur dans le réseau de ventilateurs en fonction d'un résultat de classification comprennent :
déterminer, par le tableau de surveillance, la relation correspondante entre un ventilateur et un sous-réseau de capteurs de température ;
sélectionner, par le tableau de surveillance, des températures disponibles à partir des informations de température, et calculer une température de référence en fonction des températures disponibles, dans lequel les températures disponibles comprennent une température environnementale à court terme et des températures d'air entrant et sortant à court terme, et la température de référence est une différence standard entre la température environnementale à court terme et les températures d'air entrant et sortant à court terme ; et
définir, par le tableau de surveillance, la température cible de chaque ventilateur en fonction de la température de référence et du bruit cible, et définir les informations de température cible de chaque ventilateur dans le réseau de ventilateurs en fonction de la température cible de chaque ventilateur et de la relation correspondante.

14. Dispositif de réseau, comprenant le système de régulation de la vitesse d'un ventilateur selon l'une quelconque des revendications 1 à 9.
